# EUROPEAN PATENT APPLICATION

(11) **EP 4 484 642 A1**
(43) Date of publication of application: **01.01.2025**
(21) Application number: 24181563.8
(22) Date of filing: 12.06.2024
(51) Int. Cl.: D21D 5/26

(54) **STOCK DEAERATION SYSTEM**

(30) Priority: 28.06.2023 FI 20235751
(71) Applicant: Valmet Technologies Oy, 02150 Espoo (FI)
(72) Inventor: PIIPPOLA, Leif, 33840 Tampere (FI); HUOVILA, Jari, 33840 Tampere (FI); KEINONEN, Niko, 40700 Jyväskylä (FI)
(74) Representative: Berggren Oy

(57) **Abstract**

The invention relates to a stock deaeration system (10) comprising a deaeration tank (11) with an inlet (12) and a feed pipe (13) for feeding stock flow into the deaeration tank (11) for removal of air and other gases from the stock. The stock deaeration system (10) further comprises a static mixer (20) or a fluidizator (20) located between the feed pipe (13) and the inlet (12) of the deaeration tank (11).

## Description

### Technical field

The present invention relates to deaeration, especially in connection with pulp and fiber web production. More especially the invention relates to a stock deaeration system according to the preamble part of the independent system claim.

### Background

As known from the prior art in fiber web production lines, especially in paper and board production lines, the fiber web is produced and treated in an assembly formed by a number of apparatuses arranged consecutively in a process line. A typical production and treatment line comprises a forming section comprising a head box and a forming unit and a press section as well as a subsequent drying section and a reel-up. The fiber web production line can further comprise other devices and sections for finishing the fiber web, for example, a size press, a calender, a coating section, and typically at least one slitter-winder for forming customer rolls as well as a roll packaging apparatus.

Before the head box stock formed of fiber suspension comprising recycled and/or virgin fibers are treated to be fed into the head box and to be used to produce the fiber webs in a fiber web production line. Thus, the fiber web production line is preceded by a system in which the fiber suspension, called stock, is prepared. At this system, a stock preparation system, various stock components, i.e. virgin and/or recycled pulp and/or broke are mixed together with dilution water, fillers and other desired additives are mixed with the stock and the stock or one or more of its components are, if considered necessary, de-aerated. The stock fed into the fiber web production line is typically called machine stock. The various component stocks included in the machine stock, i.e. stocks containing different kinds of fibers, constitute the first raw material of the machine stock, i.e. the fibrous raw material of the machine stock. Also, different fillers, additives or chemicals are added to the machine stock or the component stocks to improve the quality and printability of finished paper or the operability of the manufacturing process. Typically, the component stocks, fillers, additives and chemicals are stored in large storage tanks. The composition of the machine stock conveyed to the fiber web production line is adjusted in a dosing system at the stock preparation, where the different stock components included in the stock are blended with each other both in a pipe leading to the mixing tank and in the mixing tank itself, from where the stock is conveyed to the machine tank and from there further to the fiber web production line. The consistency of the stock to be fed into the paper machine is adjusted by changing the amount of dilution water fed into the stock, i.e. the adjustment of the consistency of the stock relates to the addition of dilution water to the stock in a suitable ratio to the amount and consistency of the stock.

In fiber web production especially in stock preparation stock deaeration systems are used for removal of air, as the air in the stock can have negative effects on downstream equipment and the quality of the final product. Deaeration facilitates faster process changes resulting in lower costs related to grade changes. Passive and active deaeration solutions are used in connection with stock preparation to meet the varying needs. In passive deaeration free air and other gases are removed by reducing process volume. In active deaeration is used a vacuum deaeration tank where dissolved gas and gas bubbles are boiled off. To intensify the deaeration process, stock or wire water can be sprayed through jet nozzles onto the roof of the tank thereby enlarging the gas removal surface area. The deaeration tank provides efficient free and dissolved gas removal, when treating stock, as by eliminating pressure and consistency variations and providing clean stock, stable process conditions for targeted fiber web grade quality are achieved.

In FI patent publication 121930 is disclosed a system in connection with a deaeration tank of a fiber web machine, in which in connection with the deaeration tank or in close vicinity of the deaeration tank a mixer unit is arranged, to which mixer unit an accept flow of stock from a cleaning system and at least one dilution water flow is piped. The mixing unit comprises a pipe curve, inside through which pipe curve at least one other pipe is centrally guided, and via which pipe curve the dilution water flow, to which dilution water flow the stock flow will be mixed, is piped. The mixing unit comprises a flow accelerator and corrugated wall design as wall design of the inner pipe. In this known system mixing is in some cases unsatisfactory.

An object of the invention is to create a stock deaeration system, in which the disadvantages and problems of prior art are eliminated or at least minimized.

In particular an object of the invention is to create an improved stock deaeration system, in particular in respect of mixing of the stock before the deaeration such that stock of good and even quality for the fiber web production is provided.

### Summary

In order to achieve the above objects and those that will come apparent later the stock deaeration system according to the invention is mainly characterized by the features of the characterizing part of the independent system claim. Advantageous aspects and features of the invention are presented in the dependent claims.

According to the invention the stock deaeration system comprises a deaeration tank with an inlet and a feed pipe for feeding stock flow into the deaeration tank for removal of air and other gases from the stock and the stock deaeration system further comprises a static mixer or a fluidizator located between the feed pipe and the inlet of the deaeration tank.

According to an advantageous feature of the invention the feed pipe of the stock deaeration system comprises at least one feed connection located before the static mixer or the fluidizator for adding at least one flow component to the stock flow in the feed pipe.

According to an advantageous feature of the invention the additional flow component/-s is/are selected from a group of wire water flow, flume water flow, chemical flow, accept flow from a reject screen or from a hydrocyclone, flow/- s from other stock or water sources provided in connection with a stock preparation system and/or a fiber web production line.

According to an advantageous aspect of the invention the stock deaeration system comprising a deaeration tank with an inlet and a feed pipe for feeding stock flow into the deaeration tank for removal of air and other gases, which feed pipe is connected to the inlet of the deaeration tank, further comprises a static mixer or a fluidizator located between the feed pipe and the inlet of the deaeration tank. The static mixer is a device for the continuous mixing of fluid materials, without moving components. In the art, the term "static mixer" is used interchangeably with terms like "static mixing device" and "motionless mixer". In general, a static mixer comprises a plate or plates or other twisted elements for guiding the flow of the fluids and to generate turbulence so as to mix the fluids. The fluidizator is a unit by which fine solids are transformed into a fluid-like state through contact with a gas. Static mixers and fluidizators as such are known by one skilled in the art.

Typically, the stock deaeration system according to the invention is located just before the stock suspension is fed to a headbox of a fiber web production line.

According to an advantageous aspect of the invention the feed pipe of the stock deaeration system comprises at least one feed connection located before the static mixer or the fluidizator for adding at least one flow component to the stock flow. The additional flow component/-s is/are advantageously selected from a group of wire water flow, flume water flow, accept flow from a reject screen, flow/-s from other stock or water sources provided in connection with a stock preparation system and/or a fiber web production line.

By the invention and its advantageous features several advantages are achieved: good and even quality stock is provided by the deaeration system due to the improved mixing of the stock before the deaeration, and thus, stable process conditions for targeted fiber web grade quality are achieved in a fiber web production line as also consistency variations are minimized due to the improved mixing. The improved mixing also provides for improved deaeration. Further, energy savings are achieved, as dilution water is fed just before the deaeration tank, whereby the flow is smaller and energy consumption thereby smaller.

### Brief description of the drawings

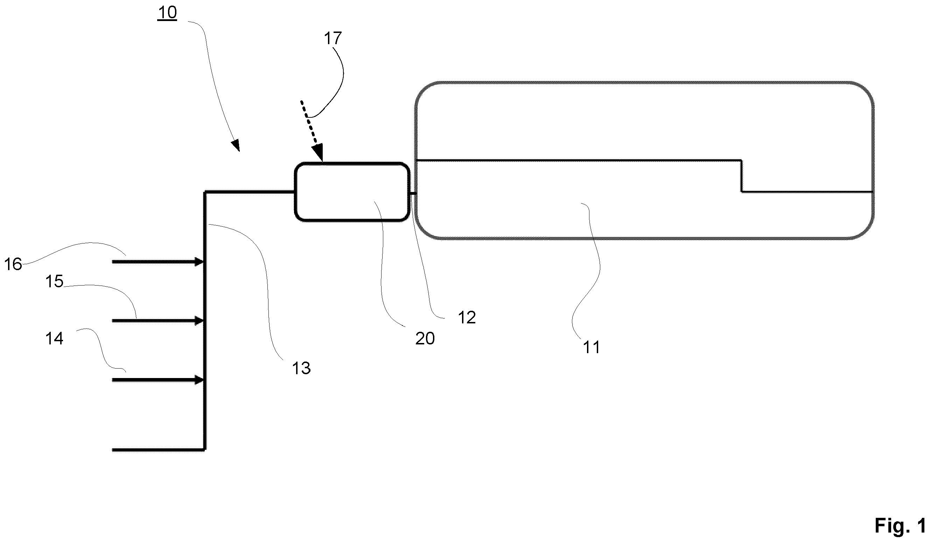

Aspects of the invention, however, together with additional objects and advantages thereof, will be best understood from the following description of some example embodiments when read in connection with the accompanying drawings and in the following the invention is described in more detail referring to the accompanying drawing, in which
In figure 1 is schematically shown an advantageous example of a stock deaeration system according to the invention.

### Detailed description

During the course of this description like numbers and signs will be used to identify like elements according to the different views which illustrate the invention. Repetition of some reference signs may have been omitted in the figures for clarity reasons.

In figure 1 is schematically shown an example of a stock deaeration system 10, which comprises a deaeration tank 11 with an inlet 12 and a feed pipe 13 for feeding stock flow into the deaeration tank 11 for removal of air and other gases. The feed pipe 13 has a flow connection to the inlet 12 of the deaeration tank 10. The stock deaeration system 10 further comprises a static mixer 20 or a fluidizator 20 located between the feed pipe 13 and the inlet 12 of the deaeration tank 11. Advantageously, the static mixer 20 or the fluidizator 20 is located in close vicinity of the deaeration tank 11, more advantageously at a small distance in flow direction before the deaeration tank 11 such, that opposite walls of the static mixer/fluidizator 20 and the deaeration tank 11 are not in contact with each other. The feed pipe 13 of the stock deaeration system 10 comprises at least one feed connection 14, 15, 16 located before the static mixer 20 or the fluidizator 20 for adding at least one flow component to the stock flow in the feed pipe 13. The additional flow component/-s is/are advantageously selected from a group of wire water flow, flume water flow, chemical flow, accept flow from a reject screen or from a hydrocyclone, flow/- s from other stock or water sources provided in connection with a stock preparation system and/or a fiber web production line. In addition to the main feed flow through the feed pipe 13 to the static mixer/fluidizator 20 there may be an extra feed connection/-s 17 to the static mixer/fluidizator 20, for example for small flow/-s, about 0,1 - 5 % of the total flow, of chemicals and/or additives.

In the description in the foregoing, although some functions have been described with reference to certain features, those functions may be performable by other features whether described or not. Although features have been described with reference to certain embodiments or examples, those features may also be present in other embodiments or examples whether described or not. Above the invention has been described by referring to some advantageous examples only to which the invention is not to be narrowly limited. Many modifications and alterations are possible within the invention as defined in the following claims.

Reference signs used in the drawing:
10 stock deaeration system
11 deaeration tank
12 inlet of the deaeration tank
13 feed pipe for stock flow
14, 15, 16 feed connection to the feed pipe
17 extra feed connection to the static mixer / fluidizator
20 static mixer / fluidizator

## Claims

1. Stock deaeration system (10) comprising a deaeration tank (11) with an inlet (12) and a feed pipe (13) for feeding stock flow into the deaeration tank (11) for removal of air and other gases from the stock, **characterized in that** the stock deaeration system (10) further comprises a static mixer (20) or a fluidizator (20) located between the feed pipe (13) and the inlet (12) of the deaeration tank (11).

2. Stock deaeration system (10) according to claim 1, **characterized in that** the feed pipe (13) of the stock deaeration system (10) comprises at least one feed connection (14, 15, 16) located before the static mixer (20) or the fluidizator (20) for adding at least one flow component to the stock flow in the feed pipe (13).

3. Stock deaeration system (10) according to claim 2, **characterized in that** the additional flow component/-s is/are selected from a group of wire water flow, flume water flow, chemical flow, accept flow from a reject screen or from a hydrocyclone, flow/-s from other stock or water sources provided in connection with a stock preparation system and/or a fiber web production line.
